# EUROPÄISCHE PATENTSCHRIFT

(11) **EP 1 907 742 B1**
(45) Veröffentlichungstag und Bekanntmachung des Hinweises auf die Patenterteilung: **16.11.2016**
(21) Anmeldenummer: 06776383.9
(22) Anmeldetag: 25.07.2006
(51) Int. Cl.: F16L 25/00, F16L 19/028, F16L 33/01, F16L 33/207

(54) **BIEGBARER SCHLAUCH SOWIE VERFAHREN ZUM MONTIEREN EINER ÜBERWURFMUTTER AUF EINEN BIEGBAREN SCHLAUCH**
FLEXIBLE HOSE AND METHOD FOR MOUNTING A COUPLING NUT ON A FLEXIBLE HOSE
TUYAU SOUPLE ET PROCEDE POUR MONTER UN ECROU D'ACCOUPLEMENT SUR UN TUYAU SOUPLE

(30) Priorität: 25.07.2005 DE 202005011642 U
(43) Veröffentlichungstag der Anmeldung: 09.04.2008
(73) Patentinhaber: Salzgitter Mannesmann Stahlhandel GmbH, 40475 Düsseldorf (DE)
(72) Erfinder: VIEREGGE, Uwe, 36037 Fulda (DE)
(74) Vertreter: Stoffregen, Hans-Herbert
(86) Internationale Anmeldenummer: PCT/EP2006/007286
(87) Internationale Veröffentlichungsnummer: WO 2007/012450

(56) Entgegenhaltungen:
- WO-A-97/12167
- US-A- 3 023 496
- US-A1- 2003 209 906
- US-A1- 2004 212 191

## Beschreibung

Die Erfindung bezieht sich auf einen biegbaren Schlauch, insbesondere Sprinklerschlauch, umfassend einen inneren Wellenschlauch, der außenseitig von einem Geflecht umgeben ist, sowie endseitig ein mit dem Schlauch verbundenes Überwurfhülsenelement, wie Überwurfmutter, zur Verbindung mit einem Bauteil wie Fitting. Ferner nimmt die Erfindung Bezug auf ein Verfahren zum Montieren eines Überwurfhülsenelements, wie Überwurfmutter, auf einen biegbaren Schlauch, wie Sprinklerschlauch, umfassend einen inneren Wellenschlauch, der außenseitig von einem Geflecht umgeben ist.

Ein entsprechender Schlauch mit einer Überwurfmutter als Überwurfhülsenelement und Fitting als Bauteil ist der WO-A-02/070071 zu entnehmen. Die Hülse ist als Steckhülse ausgebildet, die mit einem rohrförmigen Verbindungselement über einen Sprengring verbunden ist. Des Weiteren ist die Steckhülse einerseits mit dem Schlauch und andererseits mit einem dessen Ummantelung umgebenden Ringelement verschweißt. Eine diesbezügliche Verbindung zwischen Hülse und Schlauch ist dauerhaft und weist die erforderliche Dichtheit auf.

Aus der US 2004/0212191 A1, der US-A-3,023,496 oder der EP-A-0 503 369 sind gleichfalls biegbare Rohre bekannt, die mit Hülsen zur Aufnahme von Fittings bzw. Rohren untereinander verschweißt sind.

Der vorliegenden Erfindung liegt die Aufgabe zu Grunde, einen Schlauch der eingangs genannten Art, insbesondere in Form eines Sprinklerschlauchs, derart weiterzubilden, dass mit konstruktiv einfachen Maßnahmen eine sichere Verbindung zwischen der Hülse und dem Schlauch gegeben ist, ohne dass ein Verschweißen erforderlich ist. Dabei soll eine Dichtheit zwischen der Hülse und einem mit dieser zu verbindendem Fitting, bei dem es sich auch um einen Schlauch- oder Rohrabschnitt handeln kann, gegebenenfalls auch ohne zusätzliche Dichtmittel möglich sein. Ferner soll durch die Erfindung das eingangs genannte Verfahren derart weitergebildet werden, dass mit konstruktiv einfachen Maßnahmen ein Sichern eines Überwurfhülsenelementes wie Überwurfmutter auf einem flexiblen Schlauch möglich ist, wobei beim Verbinden des Schlauchs mit einem Bauteil die Kräfte ggfs. über das Geflecht eingeleitet werden sollen.

Erfindungsgemäß wird die Aufgabe in Bezug auf den biegbaren Schlauch im Wesentlichen dadurch gelöst, dass der Wellenschlauch endseitig geglättet ist, dass zwischen geglättetem Endbereich und dem Geflecht eine Stützhülse verläuft, dass das Geflecht zwischen der Stützhülse und einer die Stützhülse umgebenden Spannhülse fixiert ist, dass der geglättete Endbereich von dem Überwurfhülsenelement umgeben ist, das einen in Richtung der Stützhülse sich erstreckenden Bund aufweist, wobei bei mit dem Bauteil verbundenem Überwurfhülsenelement diesem ein gegen ein Abziehen des Überwurfhülsenelements von dem Schlauch wirkendes Anschlagelement zugeordnet ist und ein flanschartig geformter Endabschnitt des geglätteten Endbereichs des Wellenschlauchs zwischen dem Überwurfhülsenelement und dem Bauteil fixiert ist.

Erfindungsgemäß wird mit rein mechanischen Hilfsmitteln, ohne dass eine stoffschlüssige Verbindung erforderlich ist, der Schlauch mit dem vorzugsweise als Überwurfmutter ausgebildeten Überwurfhülsenelement zum Verbinden mit dem Bauteil wie Fitting verbunden, das z. B. auch ein Schlauch- oder Rohrabschnitt sein kann. Dabei ist auf besonders einfache Weise ein Verbinden wie Einschrauben des Bauteils möglich, wenn die Überwurfmutter zu dem Schlauch drehbar ist. Nach einer Ausführungsform ergibt sich gleichzeitig der Vorteil, dass die Kräfte über das Geflecht des Schlauches eingeleitet werden, da dieses durch Verpressen der Spannhülse um die Stützhülse fixiert ist, so dass infolgedessen die Zugkräfte, die über das Überwurfhülsenelement eingeleitet werden, auf das Geflecht übertragen werden.

Um sicherzustellen, dass das Überwurfhülsenelement von dem Schlauch nicht abgezogen werden kann, weist dieses einen in Richtung des Schlauchs verlaufenden Bund auf, der dann gegen einen Anschlag anliegt, wenn das Überwurfhülsenelement mit dem Bauteil verbunden ist. Der Anschlag kann durch einen radial abragenden Abschnitt der Stützhülse und/oder der Spannhülse gebildet werden. Nach einer weiteren Ausführungsform wird der Anschlag durch einen Ring bzw. ein Ringelement gebildet, der bzw. das die Stützhülse und die Spannhülse überragt und in axialer Richtung zwischen diesen gesichert ist.

Das Ringelement kann aus zusammengesetzten Halbringen oder Halbschalen bestehen, um diese in den in axialer Richtung verlaufenden Zwischenraum zwischen der Stützhülse und der Spannhülse einsetzen zu können. Es besteht jedoch auch die Möglichkeit, den Anschlag durch ein Ring- oder Hohlzylinderelement zu bilden, das zwischen bauteilseitiger Stirnfläche der Stützhülse und dem flanschartig umgeformten Endabschnitt des Wellenschlauchs angeordnet ist.

Sofern der Anschlag durch das außerhalb der Stütz- und Spannhülse verlaufende Ringelement gebildet wird, werden die axialen Kräfte nicht über das Geflecht des Schlauches, sondern über den Wellenschlauch selbst eingeleitet. Eine entsprechende Krafteinleitung erfolgt auch dann, wenn der flanschartig umgeformte Endabschnitt des Wellenschlauchs unmittelbar zwischen dem Überwurfhülsenelement und dem Bauteil festgeklemmt wird, ohne dass zusätzlich ein Anschlag für das Überwurfhülsenelement vorhanden ist. Vielmehr bildet in diesem Fall der flanschartig umgeformte Endabschnitt und das Bauteil in dem Bereich, in dem das Überwurfhülsenelement flächig an diesem anliegt, den Anschlag.

Zur Montage des Überwurfhülsenelements ist vorgesehen, dass dieses zunächst auf den Schlauch gesteckt wird. Sodann wird das Geflecht vom Ende des Wellenschlauchs zurückgezogen, der sodann geglättet wird, sofern nicht bereits ein geglätteter Endabschnitt vorliegt. Auf das glatte Ende des Wellenschlauches wird die Stützhülse geschoben. Das Geflecht wird entlang der Außenseite der Stützhülse gezogen. Der entsprechende Bereich wird danach umfangsseitig von der Spannhülse umgeben, die anschließend verpresst wird. Hierdurch ergibt sich eine kraftschlüssige Verbindung zwischen der Stütz- und Spannhülse und dem zwischen diesen verlaufenden Geflecht. Das glatte Ende des Wellenschlauchs, das die Stützhülse innenseitig axial überragt, wird sodann zu einem Flansch umgeformt, d. h. aufgeweitet und nach außen umgebogen oder zu einem Falz geformt, der z. B. zur Fixierung eines Dichtringes benutzt werden kann.

Unabhängig hiervon kann sich der freie Endbereich des Wellenschlauches entlang der radial verlaufenden freien Stirnfläche der Stützhülse in einem Umfang erstrecken, dass der entsprechende Bereich mittelbar oder unmittelbar zwischen dem Bauteil und der Stützhülse festgeklemmt wird. Beim unmittelbaren Festklemmen zwischen dem Bauteil und Stützhülse bildet der Endbereich des Wellenschlauchs die erforderliche Dichtung. Bevorzugterweise erstreckt sich jedoch zwischen Bauteil und entlang der Stirnfläche der Stützhülse verlaufendem Randbereich des Wellenschlauchs eine Dichtung wie Ringdichtung.

Alternativ kann der flanschartige Endbereich des geglätteten Wellenschlauchs zwischen dem als Anschlag dienenden Ringelement und dem Bauteil festgeklemmt werden, wobei bevorzugterweise zwischen dem flanschartigen Endabschnitt und dem Bauteil eine Dichtung wie Ringdichtung verläuft.

Ein unmittelbares Festklemmen zwischen dem Anschlag und dem Bauteil ist gleichfalls möglich. In diesem Fall sollte der flanschartige Endabschnitt geneigt zur Längsachse des Schlauchs bzw. der Hülsen verlaufen.

Ferner kann zuvor das Überwurfhülsenelement in Richtung des freien äußeren Endes der Stützhülse entlang des Schlauches verschoben werden, wobei der die Stufe bildende umlaufende Bund des Überwurfhülsenelements gegen ein Abziehen von dem Schlauch entweder durch das vorzugsweise aus zwei Halbringen bzw. -schalen bestehende Ringelement oder einen nach außen abgewinkelten äußeren flanschartigen Rand der Stützhülse oder dem weiteren Ring- oder Hohlzylinderelement als Anschlag zum Anliegen kommt.

Insbesondere besteht erwähntermaßen auch die Möglichkeit, dass bei mit dem Überwurfhülsenelement verbundenem Bauteil letzteres selbst die Funktion des Anschlags ausübt, nämlich dann, wenn zwischen Bauteil und dem Überwurfhülsenelement der flanschartige Endabschnitt des endseitig geglätteten Wellenschlauchs festgeklemmt wird. In diesem Fall weist der Endbereich die Form einer trompetenartigen Erweiterung auf, die gleichfalls als Flansch bezeichnet wird.

Der Flansch kann aus einem einfachen oder einem doppelten, also gefalteten Abschnitt des geglätteten Wellenschlauchs bestehen, wobei auch die Möglichkeit besteht, dass der Flansch Abschnitt eines Falzes ist.

Erfindungsgemäß kann der Anschlag auch das zwischen der Stützhülse und dem flanschartigen Abschnitt verlaufende hohlzylindrische bzw. ringförmige Element sein, dessen bauteilseitige Stirnfläche senkrecht zur Längsachse der Stützhülse oder schräg zu dieser verläuft. Der schräge Verlauf ist insbesondere dann gewählt, wenn der flanschartige Endabschnitt des Wellenschlauchs ohne zusätzliche Dichtung zwischen dem Bauteil und dem Überwurfhülsenelement fixiert wird und gleichzeitig Dichtfunktion ausübt.

Bevorzugterweise verläuft jedoch zwischen dem Bauteil und zugewandter Fläche des flanschartigen Abschnitts des Schlauchs ein Dichtelement wie eine Ringdichtung.

Insbesondere ist vorgesehen, dass die Stützhülse im Schnitt eine einen Querschenkel nicht aufweisende H-Form aufweist, wobei zwischen deren nach außen abgewinkelten Rändern die Spannhülse verläuft, deren axiale Erstreckung jedoch kleiner als lichter Abstand des in axialer Richtung des Schlauches sich erstreckenden Abschnitts der Stützhülse ist. Diese weist folglich die Geometrie eines Hohlzylinders mit dem endseitig nach außen abgewinkelten Rändern oder Flanschen auf.

Die Spannhülse wird derart kraftschlüssig um die Stützhülse bei gleichzeitigem Festklemmen des Geflechtes gepresst, das zwischen bauteilseitigem Stirnrand der Spannhülse und zugewandter Fläche des nach außen abgewinkelten Randbereich der Stützhülse das den Anschlag für die Überwurfmutter bildende Element wie die Halbringe bzw. - schalen einbringbar ist.

Sofern der Endbereich des geglätteten Schlauchabschnitts als Falz ausgebildet ist, so erstreckt sich der Flanschabschnitt entlang außenseitiger Fläche der Stützhülse bzw. des zwischen der Stützhülse und dem Flanschabschnitt verlaufenden den Anschlag für das Überwurfhülsenelement bildende Ring- bzw. Hohlzylinderelements. Auf gegenüber liegender Seite des Flanschabschnitts und auf dem in axialer Richtung verlaufenden äußeren Bund des Falzes ist sodann bevorzugterweise ein Dichtelement angeordnet, das beim Verbinden des Überwurfhülsenelements mit dem Bauteil zwischen diesem und dem Flanschabschnitt des Schlauchs fixierbär ist.

Wird der flanschartige Endbereich zwischen dem Bauteil und dem zwischen der Stützhülse und dem flanschartigen Endabschnitt verlaufenden Element fixiert, so werden die axialen Kräfte im Wesentlichen ausschließlich über den flanschartigen Abschnitt des Wellenschlauchs übertragen und nicht über die Stützhülse und das Geflecht.

Bei dem Überwurfhülsenelement handelt es sich insbesondere um eine Überwurfmutter, die mit dem Bauteil wie einem Fitting verschraubbar ist. Andere Ausgestaltungen sind gleichfalls möglich. So kann die Überwurfmutter im Innenbereich auch mit einem Gewindefreistich ausgeführt werden. Es besteht jedoch auch die Möglichkeit, das Überwurfhülsenelement ohne Gewinde auszubilden, um z. B. eine Verbindung mit einem Bauteil über eine Flanschverbindung herzustellen. In diesem Fall ist es auch nicht erforderlich, dass das Überwurfhülsenelement drehbar zu dem Schlauch ist. Vielmehr kann nach fertiger Montage eine Unverdrehbarkeit durch z. B. Umbördeln gegeben sein.

Die hülsen- bzw. ringförmigen Elemente können aus unlegiertem Stahl bzw. rostfreiem Edelstahl bestehen. Die Oberflächen weisen eine für den Einsatzzweck geeignete Behandlung auf. Eine KTL- oder DACROMET-Beschichtung ist möglich. Auch kann ein galvanisches Verzinken erfolgen.

Bei einer KTL-Beschichtung, die nicht metallisch ist, ergibt sich der Vorteil, dass sich hierdurch eine elektrisch nicht leitende Schutzschicht ergibt, wodurch mögliche Spaltkonosionen verhindert werden.

Die einzusetzende Dichtung kann nach dem Prinzip der Flachdichtung arbeiten. Dabei richtet sich der Dichtungswerkstoff nach dem Einsatzfall, wird also in Abhängigkeit von den auftretenden Temperaturen, Drücken und durch das durch den Schlauch strömende Medium bestimmt.

Ein Verfahren zum Montieren eines Überwurfhülsenelements sowie Überwurfmutter auf einen biegbaren Schlauch, wie Sprinklerschlauch, umfassend einen inneren Wellenschlauch, der außenseitig von einem Geflecht umgeben ist, zeichnet sich durch die Verfahrensschritte aus:
- Zurückziehen des Geflechts von einem Ende des Wellenschlauchs,
- Glätten des Wellenschlauchs in seinem freigelegten Endbereich,
- Schieben einer Stützhülse auf den geglätteten Endbereich des Wellenschlauchs,
- Umgeben der Stützhülse mit dem auf diese gezogenen Geflecht,
- zumindest abschnittsweises Umgeben der Stützhülse in ihrem von dem Geflecht umgebenen Bereich von einer Spannhülse,
- kraftschlüssiges Verbinden der Spannhülse mit der Stützhülse,
- Umformen des geglätteten und axial die Stützhülse überragenden Wellenschlauchs zu einem flanschförmigen Abschnitt,
wobei das Überwurfhülsenelement vor oder nach Aufbringen der Stützhülse über den Schlauch geschoben wird und die Stützhülse und/oder die Spannhülse und/oder ein zwischen dem flanschartigen Abschnitt des geglätteten Wellenschlauchs und der Stützhülse eingebrachtes Element und/oder ein mit dem Überwurfhülsenelement verbindbares Bauteil Anschlag gegen ein Abziehen des Überwurfhülsenelements ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine erste Ausführungsform eines Schlauches,
- Fig. 2: eine Abwandlung der Ausführungsform gemäß Fig. 1,
- Fig. 3: eine zweite Ausführungsform eines Schlauches,
- Fig. 4: eine Abwandlung des Schlauches gemäß Fig. 3,
- Fig. 5: eine dritte Ausführungsform eines Schlauches,
- Fig. 6: eine Abwandlung des Schlauches gemäß Fig. 5,
- Fig. 7: eine vierte Ausführungsform eines Schlauches,
- Fig. 8: eine erste Abwandlung des Schlauchs gemäß Fig. 7,
- Fig. 9: eine zweite Abwandlung des Schlauchs gemäß Fig. 7,
- Fig. 10: eine fünfte Ausführungsform eines Schlauches,
- Fig. 11: eine erste Abwandlung des Schlauchs gemäß Fig. 10,
- Fig. 12: eine zweite Abwandlung des Schlauchs gemäß Fig. 10,
- Fig. 13: eine sechste Ausführungsform eines Schlauches,
- Fig. 14: eine erste Abwandlung des Schlauchs gemäß Fig. 13 und
- Fig. 15: eine zweite Abwandlung des Schlauchs gemäß Fig. 13 .

In den Figuren, in denen gleiche Elemente mit gleichen Bezugszeichen gekennzeichnet sind, ist ein flexibler Schlauch 10 dargestellt, der insbesondere in Sprinkleranlagen zum Einsatz gelangen soll. Der Schlauch 10 besteht aus einem inneren Wellenschlauch 12 und einem äußeren Geflecht 14.

Der Schlauch 10 wird mit einem Bauteil 18 verbunden. Hierzu geht von dem Schlauch 10 ein Überwurfhülsenelement 16 aus, das mit dem Bauteil 18 z. B. verschraubt werden kann. Daher handelt es sich bei dem Überwurfhülsenelement 16 vorzugsweise um eine Überwurfmutter, ohne dass hierdurch eine Beschränkung der Erfindung erfolgen soll. Andere Verbindungsarten sind gleichfalls möglich. So kann das Überwurfhülsenelement 16 mit dem Bauteil 18 auch über'eine Flanschkupplung verbunden werden. Bei dem Bauteil 18 handelt es sich insbesondere um ein Fitting. Andere Bauteile wie Rohranschlüsse oder -verzweigungen sind gleichfalls möglich.

Aus Gründen der Vereinfachung wird jedoch nachstehend das Überwurfshülsenelement 16 als Überwurfmutter und das Bauteil 18 als Fitting bezeichnet.

Sofern die Überwurfmutter 16 ein Innengewinde 20 aufweist, ist die Überwurfmutter 16 auf ein Außengewinde des Fittings 18 schraubbar. Hierin besteht jedoch kein zwingendes Merkmal. Vielmehr kann auch eine Verbindung zwischen dem Überwurfhülsenelement und dem Bauteil z. B. über eine Flanschverbindung erfolgen.

Im Falle, dass die Überwurfmutter 16 ein Innengewinde 20 aufweist, besteht auch die Möglichkeit, dass der Innenbereich einen Gewindefreistich aufweist. Alle diese Varianten sollen von der erfindungsgemäßen Lehre erfasst werden.

Um eine druckdichte Verbindung zwischen dem Fitting 18 und dem Rohr 10 über die Überwurfmutter 16 zu ermöglichen, sind verschiedene Konstruktionen möglich. Wesentliche Bestandteile sind jedoch eine Stützhülse 24 und eine diese koaxial umgebende Spannhülse 26, die auch als Spannring bezeichnet werden kann, sowie ein geglätteter Endabschnitt 28 des Wellenschlauchs 12. Des Weiteren erstreckt sich ein Endabschnitt 30 des Geflechts 14 zwischen der Stützhülse 24 und der Spannhülse 26.

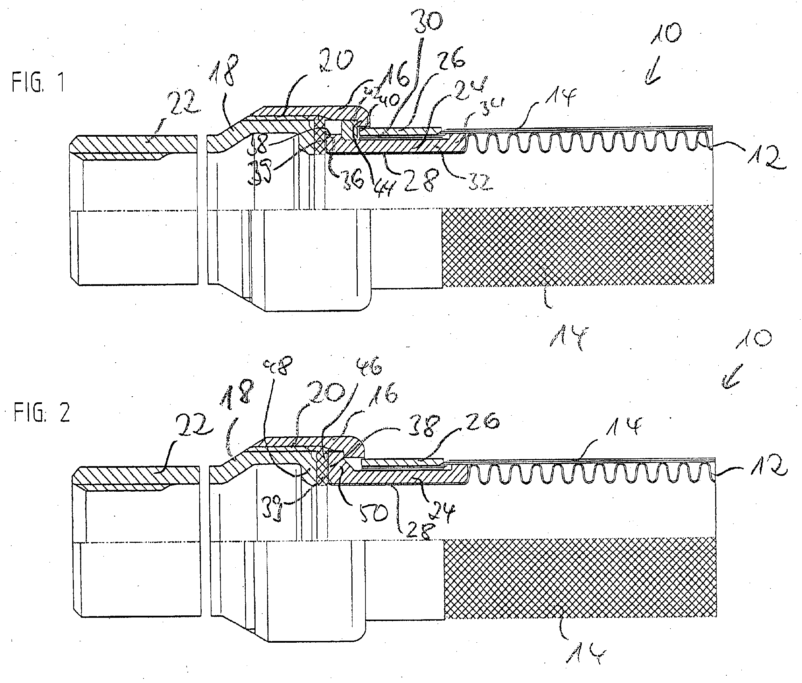

Die Stützhülse 24 weist nach den Fig. 1 bis 6 im Schnitt eine einen Querschenkel nicht aufweisende H-Geometrie mit axial verlaufendem Mittelabschnitt 32 sowie radial verlaufenden nach außen abgewinkelten Rändern 34, 36 auf. Mit anderen Worten ist die Stützhülse 24 ein Hohlzylinder mit den nach außen abgewinkelten Rändern 34, 36.

Der Spannring bzw. die Spannhülse 26 verläuft zwischen den Rändern 34, 36 und weist eine axiale Erstreckung auf, die kleiner als der lichte Abstand zwischen den Seitenschenkeln 34, 36 ist.

Zur Montage bzw. Sicherung der Überwurfmutter 16 wird diese zunächst über den Schlauch 10 geschoben, und zwar in einen Bereich, der außerhalb der Stützhülse 24 verläuft. Sodann wird das .Geflecht 14 zurückgeschoben, damit die Stützhülse 24 auf den geglätteten Endabschnitt 28 des Wellenschlauchs 12 geschoben werden kann. Die Stützhülse 24 wird in einem Umfang auf den geglätteten Endbereich 28 geschoben, dass sich ein flanschartig umgeformter Endabschnitt 39 des Wellenschlauchs 12, also des Endbereichs 28 entlang radial verlaufender Außenfläche des in der Zeichnung linken Randes 36 erstreckt, also entlang der freien Stirnfläche 38 der Stützhülse 24. Sodann wird das Geflecht 14 über die Stützhülse 24 gezogen und die Spannhülse 26 in dem Bereich der Stützhülse 24 und um das Geflecht 14, also dem Endabschnitt 30 positioniert, um sodann die Spannhülse 26 zu verpressen. Hierdurch erfolgt eine kraftschlüssige Verbindung des Abschnitts 30 des Geflechts 14 zwischen der Spannhülse 26 und der Stützhülse 24. Der in der Zeichnung über das linke Ende der Spannhülse 26 vorstehende Bereich des Geflechts 14 wird entfernt.

Der flanschartige Endabschnitt 39, der auch Abschnitt eines Falzes sein kann, ist ein weiteres wesentliches Merkmal der erfindungsgemäßen Lehre. Dabei kann der flanschartige Endabschnitt 39 des Wellenschlauchs 12 einfach oder doppelt ausgebildet sein oder schräg zur Längsachse des Schlauchs 10 verlaufen. Die diesbezüglichen Varianten, die auch den Falz mit einschließen, werden vereinfacht als flanschartiger Endabschnitt bezeichnet.

Die Spannhülse 26 wird in Bezug auf die Stützhülse 24 derart ausgerichtet und fixiert, dass ein Freiraum zwischen vorderem Randbereich 40 der Spannhülse 26 und Innenfläche des fittingseitig verlaufenden Randes 36 der Stützhülse 24 verbleibt, um in diesen einen Ring bildende Halbschalen 42 einzusetzen. Die Halbschalen 42 bilden einen Anschlag für einen nach innen umgebogenen in Bezug auf den einzuschraubenden Fitting 18 fern liegenden Rand 44 der Überwurfmutter 16, der die Funktion eines Bundes hat. Lichter Durchmesser des Bundes ist somit kleiner als maximaler Durchmesser der den Anschlag bildenden Halbschalen 42. Hierdurch bedingt kann die Überwurfmutter 16 die zwischen der Stützhülse 24 und der Spannhülse 26 angeordneten Halbschalen 42 nicht überwinden, die gleichzeitig beim Einschrauben des Fittings 18 als Gegenlager wirken.

Auf den aufgeweiteten und nach außen umgebogenen, also flanschartigen Endabschnitt 39 des geglätteten Endbereichs 28, der sich entlang radialer äußerer Stirnfläche 38 der Stützhülse 24 erstreckt, wird eine Ringdichtung 46 angeordnet, die beim Einschrauben des Fittings 18 in die Überwurfmutter 20 zwischen einen nach innen umlaufenden Abschnitt 48 des Fittings 18 und dem Randabschnitt 39 des geglätteten Endabschnitts 28 des Wellenschlauchs 12 gepresst wird, wodurch die erforderliche Dichtheit gewährleistet ist.

Ist nach dem Ausführungsbeispiel der Fig. 1 als Anschlag gegen ein Abziehen der Überwurfmutter 16 von dem Schlauch 10 der aus den Halbschalen 42 bestehende Ring vorgesehen, so kann die gleiche Funktion durch einen entsprechend verlängerten radial nach außen gerichteten äußeren Flansch oder Querschenkel 50 der Stützhülse 24 realisiert werden, wie dies sich aus der Fig. 2 ergibt.

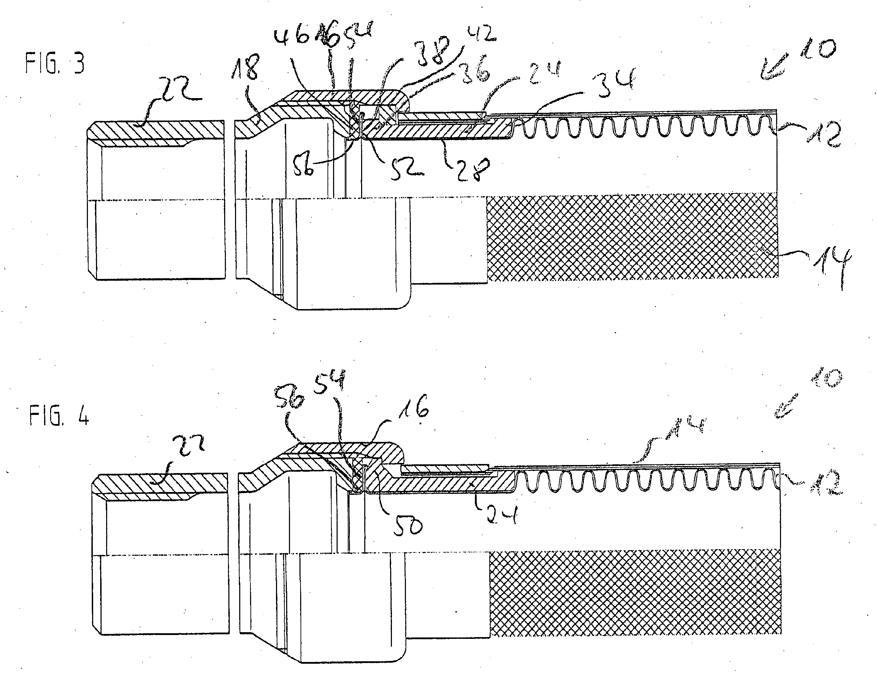

Das Ausführungsbeispiel in der Fig. 3 und 4 unterscheidet sich von dem der Fig. 1 und 2 dahingehend, dass der geglättete Endabschnitt 28 des Wellenschlauchs 12 als Falz 52 ausgebildet ist, der aus einem ersten entlang der Stirnfläche 38 des Querschenkels 36 verlaufenden flanschartigen Abschnitt 54 und einem senkrecht hierzu verlaufenden einen Bund darstellenden Abschnitt 56 besteht, der sich axial erstreckt. Entsprechend dem Ausführungsbeispiel der Fig. 1 und 2 wird die Dichtung 46 auf den auf der äußeren radial verlaufenden Stirnfläche 38 der Stützhülse 24 verlaufenden Abschnitt des geglätteten Endbereichs 28 des Wellenschlauchs 12 gesetzt, der der erste Abschnitt 54 des Falzes ist. Der zweite Abschnitt 56, der in Bezug auf die Überwurfmutter 16 axial verläuft, erstreckt sich entlang des axial verlaufenden Innenrandes der Ringdichtung 46, die folglich koaxial zu dem zweiten Abschnitt 56 verläuft. Somit ist eine einfache Positionierung der Ringdichtung 46 gegeben.

Entsprechend der Fig. 2 unterscheidet sich die Ausführungsform der Fig. 4 von der der Fig. 3 dahingehend, dass die Überwurfmutter 16 nicht gegen den zum Beispiel aus Keramik bestehenden Ring 42, als der Anschlag beim Einschrauben des Fittings 18 anliegt, sondern unmittelbar an dem Flansch oder Querschenkel 50 der Stützhülse 24.

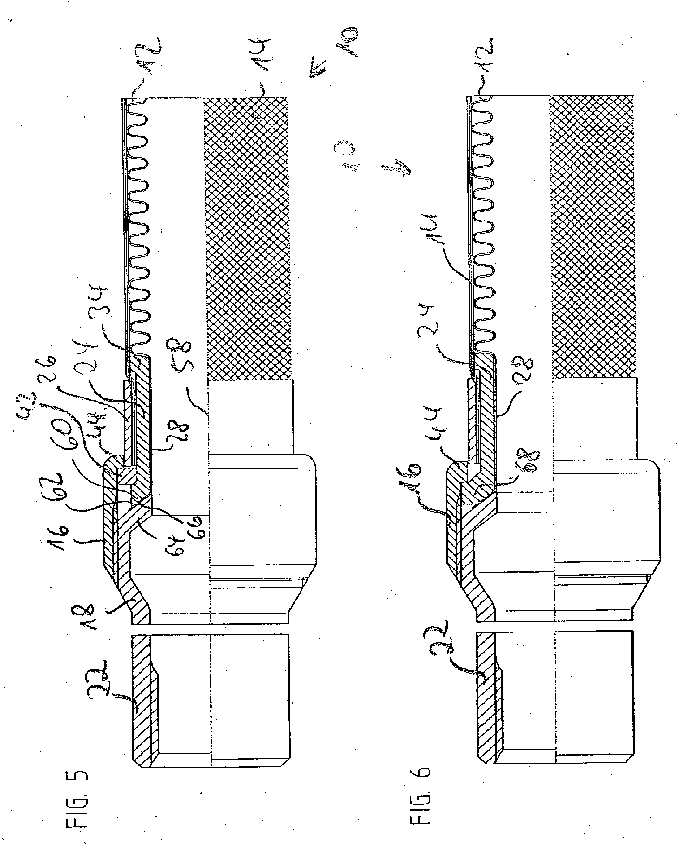

Ist zur Abdichtung des Fittings 18 gegenüber der Stützhülse 24 nach den Fig. 1 - 4 die Ringdichtung 46 vorgesehen, so besteht auch die Möglichkeit, dass der äußere flanschartige Randbereich des geglätteten Endabschnitts 28 des Wellenschlauchs 12 die Dichtfunktion ausübt. Dies soll anhand der Fig. 5 und 6 verdeutlicht werden, bei denen Elemente, die denen der Fig. 1 - 4 entsprechen, mit gleichen Bezugszeichen versehen sind.

Abweichend von den Ausführungsbeispielen der Fig. 1 - 4 weist die Stützhülse 24 keine äußere senkrecht zur Längsachse 58, sondern eine geneigt zur Längsachse 58 des Schlauchs 10 und damit der Stützhülse 24 verlaufende Stirnfläche 60 auf, entlang der der flanschartige Randbereich 62 des geglätteten Endbereichs 28 des Wellenschlauchs 12 verläuft. Der Verlaufsgeometrie der Stirnfläche 60 angepasst geht von dem Fitting 18 ein entsprechender nach innen gerichteter Abschnitt 64 mit einer Außenfläche 66 aus, die parallel zu der Stirnfläche 60 verläuft. Beim Einschrauben des Fittings 18 wird demzufolge der äußere Randbereich 62 des geglätteten Wellenschlauchs 12 zwischen den Flächen 60 und 66 gepresst und übt hierdurch die erforderliche Dichtwirkung aus.

Liegt entsprechend der Fig. 5 die Überwurfmutter 16 mit ihrem nach innen abgewinkelten schlauchseitig verlaufenden Rand 44 an dem zwischen der Stützhülse 24 und der Spannhülse 26 verlaufendem Ring 42 an, so dient entsprechend der Fig. 2 und 4 in der Fig. 6 der Flansch oder äußere Querschenkel, also der nach außen abgewinkelte Rand 68 der Stützhülse 24 als Anschlag für die Überwurfmutter 16.

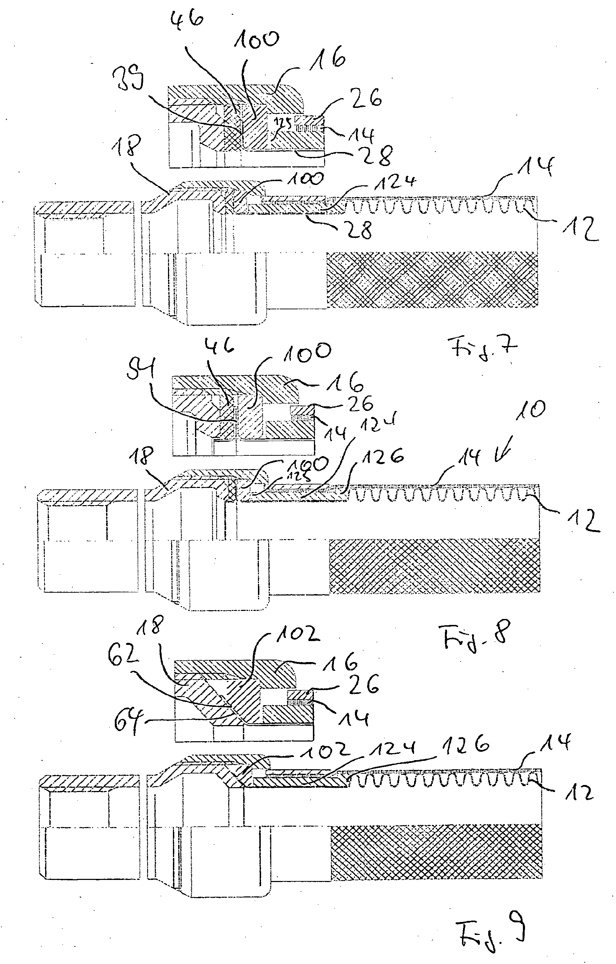

Den Fig. 7 bis 15 sind weitere hervorzuhebende Ausführungsformen des erfindungsgemäßen Schlauches 10 zu entnehmen, die jedoch sämtlichst die die Erfindung prägenden Merkmale einer Stütz- und einer Spannhülse sowie eines flanschartig ausgebildeten Endabschnitts des endseitig geglätteten Wellenschlauchs aufweisen, um eine Verbindung zwischen einem Überwurfhülsenelement wie einer Überwurfmutter und einem Bauteil wie einem Fitting zu ermöglichen. Dabei werden nach den Ausführungsbeispielen der Fig. 7 bis 15 die axialen Kräfte über den flanschartig geformten Endabschnitt in den Wellenschlauch 12 übertragen.

Bezüglich der Gestaltung des flanschartigen Endabschnitts des Wellenschlauchs entsprechen die Fig. 7, 10 und 13 den Ausführungsformen der Fig. 1 und 2, die der Fig. 8, 11 und 14 die der Fig. 3 und 4 und die der Fig. 9, 12 und 15 die der Fig. 5 und 6.

Die Ausführungsformen der Fig. 7 und 9 unterscheiden sich von denen der Fig. 1 bis 6 des Weiteren dahingehend, dass als Anschlag für die Überwurfmutter 16 ein gesondertes ringförmiges oder hohlzylindrisches Element 100, 102 benutzt wird, über das der geglättete Endbereich 28, und zwar dessen flanschartig geformter Endabschnitt 39, 54 bzw. 62 zwischen der Dichtung 46 bzw. der Stirnfläche 64 des Fittings 18 fixiert und verpresst wird. Dabei weicht im Vergleich zu den Ausführungsformen der Fig. 1 bis 6 die Stützhülse 124 in der Geometrie insoweit ab, als dass diese die Form eines Hohlzylinders mit einem fittingfernliegenden nach außen abgewinkeltem Rand 126 aufweist, also im Schnitt eine T-Form bzw. die von zwei L. Mit anderen Worten weist die Stützhülse eine langgestreckte Hohlzylindergeometrie mit dem schlauchseitig abgewinkelten Rand 126 oder Flansch auf. Da die Stützhülse 124 aufgrund des Fehlens des fittingseitig verlaufenden abgewinkelten Randes weder unmittelbar noch mittelbar als Anschlag für die Überwurfmutter 16 dient, kann demzufolge der Außendurchmesser minimiert werden, wodurch sich jedoch gegebenenfalls Einbußen bezüglich der Verschiebbarkeit der Überwurfmutter 16 über den Schlauch 10 entlang dessen Geflechts 14 ergeben.

Das ringförmige Element 100, 102 ist axial derart dimensioniert, dass dieses gut passend zwischen bauteilseitiger Stirnfläche 125 der Stützhülse 24 und dem flanschartig umgeformten Endabschnitt 39, 54, 62 des geglätteten Endbereichs 28 des Wellenschlauchs 12 einsetzbar ist, so dass beim Verbinden der Überwurfmutter 16 mit dem Fitting 18 ein Wegkippen unterbleibt. Entsprechendes gilt für das nachstehend erläuterte einen Anschlag bildende Element.

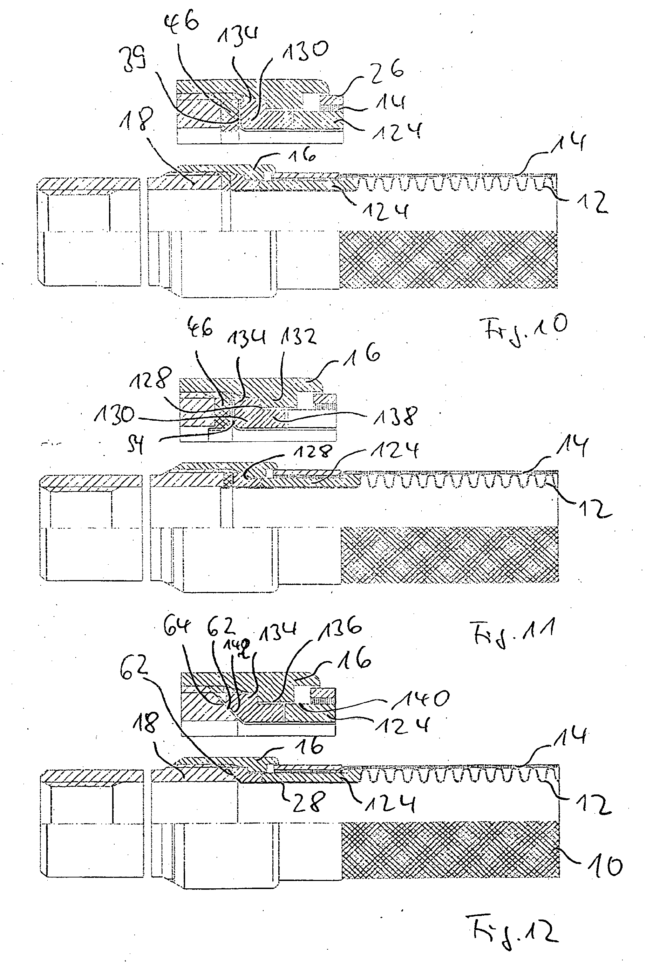

Bei der Variante gemäß der Fig. 10 bis 12 wird der Anschlag für die Überwurfmutter 16 durch ein außenseitig eine Stufe 128 bildendes Ringelement 130 gebildet, das entsprechend der Schnittdarstellung der Fig. 10 bis 12 eine L-Geometrie aufweist. Von der Überwurfmutter 16 ragt ein Abschnitt 132 radial nach innen ab, der gegen den radial verlaufenden Schenkel 134 des Ringelements 130 beim Verbinden der Überwurfmutter 16 mit dem Fitting 18 zum Anliegen kommt, so dass infolge dessen der Schenkel 134 den Anschlag bildet. Der Vorsprung 132 erstreckt sich dabei mit seiner axial verlaufenden inneren Fläche 136 sowohl entlang des axial verlaufenden Schenkels 138 des Ringelements 130 als auch der Außenfläche 140 der Stützhülse 124, deren Geometrie im Zusammenhang mit den Fig. 7 bis 9 erläutert worden ist.

Entsprechend der Darstellung der Fig. 5 wird nach der Fig. 12 der trompetenartig erweiterte Endabschnitt 62 des geglätteten Endbereichs 28 des Wellenschlauchs 12 unmittelbar zwischen dem Ringelement 134 und dem Fitting 18, d. h. dessen Stirnfläche 64 festgeklemmt. Hierzu verlaufen die Stirnfläche 64 und zugewandte Fläche 140 des Ringelements 134 geneigt zur Längsachse des Schlauches 10 und damit der Stützhülse 124 bzw. der Überwurfmutter 16 und den weiteren mit diesen verbundenen Elementen.

Entsprechend erfolgt nach Fig. 9 ein unmittelbares Festklemmen des trompetenartigen Endabschnitts 62 zwischen dem Ringelement 102 und dem Fitting 18.

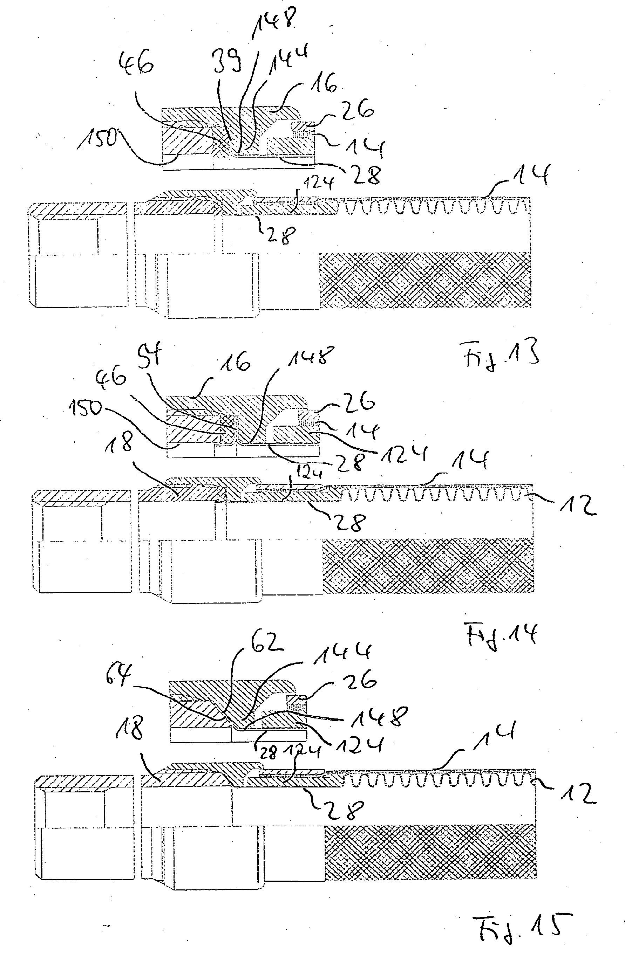

Die Fig. 13 bis 15 unterscheiden sich von den zuvor beschriebenen Ausführungsformen dahingehend, dass der Anschlag für die Hülse 16 durch den Fitting 18 selbst gebildet wird und zwar in dem Moment, in dem die Überwurfmutter 16 mit dem Fitting 18 verbunden ist und der flanschartige Endabschnitt 39 bzw. 54 bzw. 62 des Wellenschlauchs 12 zwischen der Überwurfmutter 16 und dem Fitting 18 bzw. der zwischen dieser und dem flanschartigen Endabschnitt 39, 54 verlaufenden Dichtung 46 festgeklemmt ist.

Wie sich unmissverständlich aus den Fig. 13 bis 15 ergibt, weist die Überwurfmutter 16 einen nach innen abragenden umlaufenden Vorsprung 144 auf, der sich bis nahezu zur Außenseite des geglätteten Endbereichs 28 des Wellenschlauchs 12 erstreckt. Dies ergeben insbesondere die Detailzeichnungen in den Fig. 13 bis 15. Somit erstreckt sich der Vorsprung 144 mit seiner Innenfläche entlang einer Ebene, in der in etwa die Innenfläche 150 des Fittings 18 liegt. Somit können hohe Presskräfte erzeugt werden, wodurch der flanschartige Abschnitt 39, 54 bzw. 62 des geglätteten Endbereichs 28 des Wellenschlauchs 12 hinreichend fest fixierbar ist.

Ansonsten entsprechen die konstruktiven Merkmale der Fig. 13 bis 15 denen der Fig. 7 bis 12, so dass auf die diesbezüglichen Erläuterungen verwiesen wird.

## Patentansprüche

1. Biegbarer Schlauch (10), insbesondere Sprinklerschlauch, umfassend einen inneren Wellenschlauch (12), der außenseitig von einem Geflecht (14) umgeben ist, sowie endseitig ein mit dem Schlauch verbundenes Überwurfhülsenelement (16), wie Überwurfmutter, zur Verbindung mit einem Bauteil, wie Fitting (18),
**dadurch gekennzeichnet,**
**dass** der Wellenschlauch (12) endseitig geglättet ist, dass zwischen geglättetem Endbereich (28) des Wellenschlauchs und dem Geflecht (14) eine Stützhülse (24) verläuft, dass das Geflecht zwischen der Stützhülse und einer die Stützhülse umgebenden Spannhülse (26) fixiert ist, dass der geglättete Endbereich von dem Überwurfhülsenelement (16) umgeben ist, das einen in Richtung der Stützhülse sich erstreckenden Bund (44, 132, 144) aufweist, wobei bei mit dem Bauteil (18) verbundenem Überwurfhülsenelement diesem ein gegen ein Abziehen des Überwurfhülsenelements von dem Schlauch wirkendes Anschlagelement (42, 50, 68, 100, 130) zugeordnet ist und ein flanschartig geformter Endabschnitt (39, 54, 62) des geglätteten Endbereichs des Wellenschlauchs zwischen dem Überwurfhülsenelement und dem Bauteil fixiert ist.

2. Schlauch nach Anspruch 1,
**dadurch gekennzeichnet,**
**dass** das Anschlagelement ein Abschnitt (50) der Stützhülse (24) und/oder der Spannhülse (26) ist.

3. Schlauch nach Anspruch 1 oder 2,
**dadurch gekennzeichnet,**
**dass** das Anschlagelement ein von der Stützhülse (24) und/oder der Spannhülse (26) gesichertes Element wie Ringelement (42) in Form vorzugsweise von zusammengesetzten Halbringen oder -schalen ist.

4. Schlauch nach zumindest einem der vorhergehenden Ansprüche,
**dadurch gekennzeichnet,**
**dass** das Anschlagelement ein zwischen der Stützhülse (124) und dem flanschartig umgeformten Endabschnitt (39, 54, 62) des geglätteten Endbereichs (28) des Wellenschlauchs (12) verlaufendes Ring- oder Hohlzylinderelement (100, 130) ist.

5. Schlauch nach zumindest einem der vorhergehenden Ansprüche,
**dadurch gekennzeichnet,**
**dass** zwischen dem flanschartig umgeformten Endabschnitt (39, 54) und dem Bauteil (18) ein Dichtelement wie Dichtring (46) verläuft.

6. Schlauch nach zumindest einem der vorhergehenden Ansprüche,
**dadurch gekennzeichnet,**
**dass** das Überwurfhülsenelement (16) wie Überwurfmutter den Schlauch (10) drehbar umgibt.

7. Schlauch nach zumindest einem der vorhergehenden Ansprüche,
**dadurch gekennzeichnet,**
**dass** der flanschartig geformte Endabschnitt (39, 54, 62) des endseitig geglätteten Wellenschlauchs (12) unmittelbar zwischen der Stützhülse (24) und dem Dichtelement (46) fixierbar ist.

8. Schlauch nach zumindest einem der vorhergehenden Ansprüche,
**dadurch gekennzeichnet,**
**dass** der flanschartig umgeformte Endabschnitt (39, 54) des Wellenschlauchs (12) unmittelbar zwischen dem Überwurfhülsenelement (16, 144) und dem Dichtelement (46) fixierbar ist.

9. Schlauch nach zumindest einem der vorhergehenden Ansprüche,
**dadurch gekennzeichnet,**
**dass** der flanschartig geformte Endabschnitt (62) des endseitig geglätteten Wellenschlauchs (12) unmittelbar zwischen der Stützhülse (24) und dem Bauteil (18) fixierbar ist.

10. Schlauch nach zumindest einem der vorhergehenden Ansprüche,
**dadurch gekennzeichnet,**
**dass** die Stützhülse (24) überwurfhülsenelementseitig einen radial nach außen abragenden umlaufenden Rand (50) aufweist, dessen Außendurchmesser größer als lichter Innendurchmesser des Bunds (44) des Überwurfhülsenelements (16) ist.

11. Schlauch nach zumindest einem der vorhergehenden Ansprüche,
**dadurch gekennzeichnet,**
**dass** die Stützhülse (24) eine Hohlzylinderform mit bauteilseitig fernliegendem nach außen abgewinkeltem Rand (126) aufweist und dass bauteilseitig verlaufende Stirnfläche (125) zu dem flanschartig geformten Endabschnitt (39, 54) des endseitig geglätteten Wellenschlauchs (12) einen Abstand aufweist, der gleich oder geringfügig größer als axiale Erstreckung des Anschlagelements (100, 102) ist.

12. Schlauch nach zumindest einem der vorhergehenden Ansprüche,
**dadurch gekennzeichnet,**
**dass** die Stützhülse (24) eine Hohlzylinderform mit endseitig nach außen abgewinkelten Rändern (34, 36, 50, 64, 68) aufweist, zwischen denen die Spannhülse (26) verläuft.

13. Schlauch nach zumindest einem der vorhergehenden Ansprüche,
**dadurch gekennzeichnet,**
**dass** in axialer Richtung betrachtet zwischen bauteilseitig verlaufendem Rand (36) der Stützhülse (24) und der Spannhülse (26) ein die Stützhülse (24) konzentrisch umgebendes Element vorzugsweise in Form von zusammengesetzten Halbringen oder -schalen (42) als das Anschlagelement verläuft, dessen Außendurchmesser größer als lichter Innendurchmesser des nach innen gerichteten Rands bzw. Bunds (44) des Überwurfhülsenelements (16) ist.

14. Schlauch nach zumindest einem der vorhergehenden Ansprüche,
**dadurch gekennzeichnet,**
**dass** sich der flanschartig geformte Endabschnitt (39) des endseitig geglätteten Wellenschlauchs (12) entlang radial verlaufender Stirnfläche (38) der Stützhülse (24) erstreckt.

15. Schlauch nach zumindest einem der vorhergehenden Ansprüche,
**dadurch gekennzeichnet,**
**dass** bei mit dem Bauteil (18) verbundenem Überwurfhülsenelement (16) ein radial nach innen ragender Abschnitt (144) des Überwurfhülsenelements an bauteilseitig fernliegender Fläche des flanschartigen Endabschnitts (39, 54) des geglätteten Wellenschlauchs (12) anliegt und dass an gegenüberliegender Fläche das Dichtelement (46) oder das Bauteil anliegt.

16. Schlauch nach zumindest einem der vorhergehenden Ansprüche,
**dadurch gekennzeichnet,**
**dass** bauteilseitig verlaufende Stirnfläche (60) der Stützhülse (24) zumindest abschnittsweise geneigt zu deren Längsachse (58) verläuft, dass sich entlang der Stirnfläche der flanschartig ausgebildete Endabschnitt (62) des endseitig geglätteten Wellenschlauchs (12) erstreckt und dass bei mit dem Bauteil (18) verbundenem Überwurfhülsenelement (16) der Endabschnitt unmittelbar zwischen der Stirnfläche der Stützhülse und dem Bauteil abdichtend fixiert ist.

17. Schlauch nach zumindest einem der vorhergehenden Ansprüche,
**dadurch gekennzeichnet,**
**dass** bauteilseitig verlaufende Fläche des Anschlagelements (102) zumindest abschnittsweise geneigt zur Längsachse des Schlauchs (10) verläuft, dass sich entlang der Stirnfläche der flanschartig geformte Endabschnitt (62) des endseitig geglätteten Wellenschlauchs (12) erstreckt und dass bei mit dem Bauteil (18) verbundenem Überwurfhülsenelement (16) der Endabschnitt unmittelbar zwischen der Stirnfläche des Anschlagelements und dem Bauteil abdichtend fixiert ist.

18. Verfahren zum Montieren eines Überwurfhülsenelementes (16) wie Überwurfmutter, auf einen biegbaren Schlauch (10), wie Sprinklerschlauch, umfassend einen inneren Wellenschlauch (12), der außenseitig von einem Geflecht (14) umgeben ist,
**gekennzeichnet durch** die Verfahrensschritte
- Zurückziehen des Geflechts (14) von einem Ende des Wellenschlauchs - (12),
- Glätten des Wellenschlauchs in seinem freigelegten Endbereich,
- Schieben einer Stützhülse (24) auf den geglätteten Endbereich des Wellenschlauchs,
- Umgeben der Stützhülse mit dem auf diese gezogenen Geflecht,
- zumindest abschnittsweises Umgeben der Stützhülse in ihrem von dem Geflecht umgebenen Bereich von einer Spannhülse (26),
- kraftschlüssiges Verbinden der Spannhülse mit der Stützhülse,
- Umformen des geglätteten und axial die Stützhülse überragenden Wellenschlauchs zu einem flanschförmigen Abschnitt (39, 54, 62),
wobei das Überwurfhülsenelement (16) vor oder nach Aufbringen der Stützhülse über den Schlauch (10) geschoben wird und die Stützhülse und/oder die Spannhülse und/oder ein zwischen dem flanschartigen Abschnitt des geglätteten Wellenschlauchs und der Stützhülse eingebrachtes Element (42) und/oder ein mit dem Überwurfhülsenelement verbindbares Bauteil (18) Anschlag gegen ein Abziehen des Überwurfhülsenelements ist.

## Claims

1. A flexible hose (10), particularly a sprinkler hose, comprising an inner corrugated hose (12), which is surrounded on the outside by a braiding (14), as well as a coupling-sleeve element (16), such as a coupling nut, that is connected to the hose on the end side, for connection with a component, such as a fitting (18),
**characterized in that**
the corrugated hose (12) is smoothed on the end side; that a support sleeve (24) runs between the smoothed end area (28) of the corrugated hose and the braiding (14); that the braiding is fixed between the support sleeve and a clamping sleeve (26) surrounding the support sleeve; that the smoothed end area is surrounded by the coupling-sleeve element (16), which features a shoulder (44, 132, 144) that extends in the direction of the support sleeve, whereby in the case of the coupling sleeve element that is connected to the component (18), a stop element (42, 50, 68, 100, 130) that acts against withdrawal of the coupling-sleeve element from the hose is assigned to said coupling-sleeve element, and a flange-shaped end section (39, 54, 62) of the smoothed end area of the corrugated sleeve is fixed between the coupling-sleeve element and the component.

2. Hose according to Claim 1,
**characterized in that**
the stop element is a section (50) of the support sleeve (24) and/or the clamping sleeve (26).

3. Hose according to Claim 1 or 2,
**characterized in that**
the stop element is an element secured by the support sleeve (24) and/or the clamping sleeve (26) such as an annular element (42), preferably in the form of composite half-rings or half-shells.

4. Hose according to at least one of the previous claims,
**characterized in that**
the stop element is a ring or hollow-cylinder element (100, 130) that runs between the support sleeve (124) and the reshaped, flange-like end section (39, 54, 62) of the smoothed end area (28) of the corrugated hose (12).

5. Hose according to at least one of the previous claims,
**characterized in that**
a sealing element, such as a sealing ring (46), runs between the flange-like, reshaped end section (39, 54) and the component (18).

6. Hose according to at least one of the previous claims,
**characterized in that**
the coupling-sleeve element (16), such as a coupling nut, rotateably encompasses the hose (10).

7. Hose according to at least one of the previous claims,
**characterized in that**
the flange-like shaped end section (39, 54, 62) of the corrugated hose (12), which is smoothed at the end side, can be fixed directly between the support sleeve (24) and the sealing element (46).

8. Hose according to at least one of the previous claims,
**characterized in that**
the flange-like, reshaped end section (39, 54) of the corrugated hose (12) can be fixed directly between the coupling-sleeve element (16, 144) and the sealing element (46).

9. Hose according to at least one of the previous claims,
**characterized in that**
the flange-like shaped end section (62) of the corrugated hose (12) that is smoothed at the end side, can be fixed directly between the support sleeve (24) and the component (18).

10. Hose according to at least one of the previous claims,
**characterized in that**
the support sleeve (24), on the coupling-sleeve side, features a circumferential edge (50) that projects radially outward, the outside diameter of said edge being greater than the clear inner diameter of the shoulder (44) of the coupling-sleeve element (16).

11. Hose according to at least one of the previous claims,
**characterized in that**
the support sleeve (24) features a hollow-cylinder form, with a component-side edge (126) on the far side, which is bent outward, and that the front surface (125) running on the component side features a distance to the flange-like shaped end section (39, 54) of the corrugated hose (12) that is smoothed on the end side, said distance being equal to or slightly larger than the axial reach of the stop element (100, 102).

12. Hose according to at least one of the previous claims,
**characterized in that**
the support sleeve (24) features a hollow-cylinder form with edges (34, 36, 50, 64, 68) that are bent outward on the end side, between which the clamping sleeve (26) runs.

13. Hose according to at least one of the previous claims,
**characterized in that**
seen in an axial direction, between the edge (36) of the support sleeve (24) running on the component side and the clamping sleeve (26), runs an element as the stop element, said element concentrically surrounding the support sleeve (24) and preferably taking the form of composite half-rings or half-shells (42), the outer diameter of said element being greater than the clear inner diameter of the inward-directed edge, or as the case may be shoulder (44) of the coupling-sleeve element (16).

14. Hose according to at least one of the previous claims,
**characterized in that**
the flange-like shaped end section (39) of the end-side smoothed corrugated hose (12) extends along the radially running front surface (38) of the support sleeve (24).

15. Hose according to at least one of the previous claims,
**characterized in that**
when the component (18) is connected to the coupling-sleeve element (16) a radially inward projecting section (144) of the coupling-sleeve element rests against the far component-side surface of the flange-shaped end section (39, 54) of the smoothed corrugated hose (12), and that the sealing element (46) or the component rests against the opposite surface.

16. Hose according to at least one of the previous claims,
**characterized in that**
the front side (60) of the support sleeve (24), that runs on the component-side, runs, at least in sections, at an angle to its longitudinal axis (58); that the flange-like shaped end section (62) of the corrugated hose (12), which is smoothed at the end side, extends along the front surface; and that when the coupling-sleeve element (16) is connected to the component (18), the end section is fixed in a sealing manner directly between the front surface of the support sleeve and the component.

17. Hose according to at least one of the previous claims,
**characterized in that**
the surface of the stop element (102), that runs along the component-side, runs, at least in sections, at an angle to the longitudinal axis of the hose (10); that the flange-like shaped end section (62) of the corrugated hose (12), which is smoothed at the end side, extends along the front surface; and that when the coupling-sleeve element (16) is connected to the component (18), the end section is sealingly fixed directly between the front surface of the stop element and the component.

18. A method of mounting a coupling-sleeve element (16) such as a coupling nut on a flexible hose (10), such as a sprinkler hose, comprising an inner corrugated hose (12), which is surrounded on the outside by a braiding (14),
**characterized by** the procedural steps
- retracting the braiding (14) from one end of the corrugated hose (12),
- smoothing the exposed end area of the corrugated hose,
- pushing a support sleeve (24) onto the smoothed end area of the corrugated hose,
- surrounding the support sleeve with the braiding drawn over it,
- surrounding the support sleeve in its area surrounded by the braiding, at least in sections, by a clamping sleeve (26),
- force-fit connection of the clamping sleeve to the support sleeve,
- reshaping of the smoothed corrugated hose that axially overlaps the support sleeve into a flange-shaped section (39, 54, 62),
whereby the coupling sleeve element (16) is pushed over the hose (10), before or after applying the support sleeve, and the support sleeve and/or the clamping sleeve and/or an element (42) that is inserted between the flange-like section of the smoothed corrugated hose and the support sleeve, and/or a component (18) that can be connected to the coupling-sleeve element serves as a stop against withdrawal of the coupling-sleeve element.

## Revendications

1. Tuyau souple (10), en particulier tuyau asperseur, comprenant un tuyau annelé (12) intérieur entouré extérieurement d'une tresse (14), ainsi qu'à son extrémité un élément d'accouplement à douille (16), tel qu'un écrou-raccord, relié au tuyau pour la liaison avec un composant, tel qu'un raccord à collerette (18),
**caractérisé en ce**
**que** le tuyau annelé (12) est lissé à son extrémité, qu'entre l'extrémité lissée (28) du tuyau annelé et la tresse (14) s'étend un manchon-support (24), que la tresse est fixée entre le manchon-support et une douille de serrage (26) entourant le manchon-support, que l'extrémité lissée est entourée par l'élément d'accouplement à douille (16), lequel présente un épaulement (44, 132, 144) s'étendant en direction du manchon-support, sachant que, lorsque l'élément d'accouplement à douille est relié au composant (18), est associé audit composant un élément de butée (42, 50, 68, 100, 130) agissant contre le retrait de l'élément d'accouplement à douille hors du tuyau, un segment terminal (39, 54, 62) en forme de bride de l'extrémité lissée du tuyau annelé étant fixé entre l'élément d'accouplement à douille et le composant.

2. Tuyau selon la revendication 1,
**caractérisé en ce**
**que** l'élément de butée est une partie (50) du manchon-support (24) et/ou de la douille de serrage (26).

3. Tuyau selon la revendication 1 ou 2,
**caractérisé en ce**
**que** l'élément de butée est un élément bloqué par le manchon-support (24) et/ou la douille de serrage (26), tel qu'un élément annulaire (42), de préférence sous forme de demi-anneaux ou de demi-coques assemblé(e)s.

4. Tuyau selon au moins l'une des revendications précédentes,
**caractérisé en ce**
**que** l'élément de butée est un élément annulaire ou un élément cylindrique creux (100, 130) s'étendant entre le manchon-support (124) et le segment terminal (39, 54, 62) en forme de bride de l'extrémité lissée (28) du tuyau annelé (12).

5. Tuyau selon au moins l'une des revendications précédentes,
**caractérisé en ce**
**qu'**un élément d'étanchéité, tel qu'une bague d'étanchéité (46), est placé entre le segment terminal (39, 54) en forme de bride et le composant (18).

6. Tuyau selon au moins l'une des revendications précédentes,
**caractérisé en ce**
**que** l'élément d'accouplement à douille (16), tel qu'un écrou-raccord, entoure le tuyau (10) de manière pivotante.

7. Tuyau selon au moins l'une des revendications précédentes,
**caractérisé en ce**
**que** le segment terminal (39, 54, 62) en forme de bride du tuyau annelé (12) lissé à son extrémité peut être fixé directement entre le manchon-support (24) et l'élément d'étanchéité (46).

8. Tuyau selon au moins l'une des revendications précédentes,
**caractérisé en ce**
**que** le segment terminal (39, 54) en forme de bride du tuyau annelé (12) peut être fixé directement entre l'élément d'accouplement à douille (16, 144) et l'élément d'étanchéité (46).

9. Tuyau selon au moins l'une des revendications précédentes,
**caractérisé en ce**
**que** le segment terminal (62) en forme de bride du tuyau annelé (12) lissé à son extrémité peut être fixé directement entre le manchon-support (24) et le composant (18).

10. Tuyau selon au moins l'une des revendications précédentes,
**caractérisé en ce**
**que** du côté de l'élément d'accouplement à douille, le manchon-support (24) présente un collet (50) circonférentiel faisant saillie radialement vers l'extérieur, dont le diamètre extérieur est supérieur au diamètre intérieur libre de l'épaulement (44) de l'élément d'accouplement à douille (16).

11. Tuyau selon au moins l'une des revendications précédentes,
**caractérisé en ce**
**que** le manchon-support (24) présente une forme de cylindre creux avec bord (126) éloigné du côté composant coudé vers l'extérieur et que sa face frontale (125) s'étendant côté composant est située à une distance du segment terminal (39, 54) en forme de bride du tuyau annelé (12) lissé à son extrémité, cette distance étant égale ou légèrement supérieure à l'extension axiale de l'élément de butée (100, 102).

12. Tuyau selon au moins l'une des revendications précédentes,
**caractérisé en ce**
**que** le manchon-support (24) présente une forme de cylindre creux avec à son extrémité des bords (34, 36, 50, 64, 68) coudés vers l'extérieur, entre lesquels s'étend la douille de serrage (26).

13. Tuyau selon au moins l'une des revendications précédentes,
**caractérisé en ce**
**que**, vu dans le sens axial, entre le bord (36) s'étendant côté composant du manchon-support (24) et la douille de serrage (26) s'étend un élément entourant concentriquement le manchon-support (24) et ayant de préférence la forme de demi-anneaux ou de demi-coques (42) assemblé(e)s constituant l'élément de butée, dont le diamètre extérieur est supérieur au diamètre intérieur libre du bord ou de l'épaulement (44) orienté vers l'intérieur de l'élément d'accouplement à douille (16).

14. Tuyau selon au moins l'une des revendications précédentes,
**caractérisé en ce**
**que** le segment terminal (39) en forme de bride du tuyau annelé (12) lissé à son extrémité s'étend le long de la face frontale (38) du manchon-support (24), ladite face frontale s'étendant dans le sens radial.

15. Tuyau selon au moins l'une des revendications précédentes,
**caractérisé en ce**
**que** lorsque l'élément d'accouplement à douille (16) est relié au composant (18), une partie (144) faisant saillie radialement vers l'intérieur de l'élément d'accouplement à douille s'appuie sur une surface éloignée du côté composant du segment terminal (39, 54) en forme de bride du tuyau annelé (12) lissé, et que l'élément d'étanchéité (46) ou le composant s'appuie sur la surface opposée.

16. Tuyau selon au moins l'une des revendications précédentes,
**caractérisé en ce**
**que** la face frontale (60) côté composant du manchon-support (24) s'étend au moins par sections de manière inclinée par rapport à l'axe longitudinal (58) dudit manchon-support, que le segment terminal (62) en forme de bride du tuyau annelé (12) lissé à son extrémité s'étend le long de la face frontale, et que lorsque l'élément d'accouplement à douille (16) est relié au composant (18), le segment terminal est directement fixé de manière étanche entre la face frontale du manchon-support et le composant.

17. Tuyau selon au moins l'une des revendications précédentes,
**caractérisé en ce**
**que** la surface du côté composant de l'élément de butée (102) s'étend au moins par sections de manière inclinée par rapport à l'axe longitudinal du tuyau (10), que le segment terminal (62) en forme de bride du tuyau annelé (12) lissé à son extrémité s'étend le long de la face frontale, et que lorsque l'élément d'accouplement à douille (16) est relié au composant (18), le segment terminal est directement fixé de manière étanche entre la face frontale de l'élément de butée et le composant.

18. Procédé pour monter un élément d'accouplement à douille (16), tel qu'un écrou-raccord, sur un tuyau souple (10), tel qu'un tuyau asperseur, comprenant un tuyau annelé (12) intérieur entouré extérieurement d'une tresse (14),
**caractérisé par** les étapes
- retrait de la tresse (14) d'une extrémité du tuyau annelé (12),
- lissage du tuyau annelé à son extrémité mise à nu,
- introduction d'un manchon-support (24) sur l'extrémité lissée du tuyau annelé,
- enveloppement du manchon-support avec la tresse passée sur lui,
- enserrement au moins par sections du manchon-support avec une douille de serrage (26) dans sa zone entourée par la tresse,
- liaison par force de la douille de serrage avec le manchon-support,
- façonnage du tuyau annelé, lissé et dépassant axialement du manchon-support, en un segment en forme de bride (39, 54, 62),
sachant qu'avant ou après la pose du manchon-support, l'élément d'accouplement à douille (16) est introduit sur le tuyau (10), et que le manchon-support et/ou la douille de serrage et/ou un élément (42) placé entre le segment en forme de bride du tuyau annelé lissé et le manchon-support et/ou un composant (18) pouvant être relié à l'élément d'accouplement à douille, constitue une butée contre un retrait de l'élément d'accouplement à douille.
